(19) Europäisches Patentamt
European Patent Office
Office européen des brevets

(11) **EP 2 366 730 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(51) Int Cl.:
*C08J 7/12* *(2006.01)*     *C08F 8/00* *(2006.01)*

(21) Anmeldenummer: **10403001.0**

(22) Anmeldetag: **17.03.2010**

(54) **VERFAHREN ZUR CHEMISCHEN MODIFIZIERUNG DER POLYMEREN OBERFLÄCHE EINES PARTIKULÄREN FESTSTOFFS**

METHOD FOR CHEMICAL MODIFICATION OF THE POLYMER SURFACE OF A PARTICULATE SOLID

PROCÉDÉ DE MODIFICATION CHIMIQUE DE LA SURFACE POLYMÈRE D'UNE MATIÈRE SOLIDE PARTICULAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**21.09.2011 Patentblatt 2011/38**

(73) Patentinhaber: **Innovent e.V.**
**07745 Jena (DE)**

(72) Erfinder:
• **Hartmann, Annett Dr.**
**07747 Jena (DE)**
• **Pawlik, Katrin Dr.**
**07743 Jena (DE)**
• **Schwedat, Stefan**
**07745 Jena (DE)**
• **Elschner, Klaus**
**07743 Jena (DE)**
• **Schimanski, Arnd Dr.**
**44329 Dortmund (DE)**

(74) Vertreter: **Beyer, Andreas**
**Patentanwälte Bressel und Partner mbB**
**Potsdamer Platz 10**
**10785 Berlin (DE)**

(56) Entgegenhaltungen:
EP-A1- 1 652 956    WO-A1-2009/080662
US-A- 3 009 906    US-A- 4 452 679

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft Verfahren zur chemischen Modifizierung der polymeren Oberfläche eines partikulären Feststoffs gemäß Anspruch 1, einen partikulären Feststoff gemäß Anspruch 8, der mit den Verfahren hergestellt werden kann sowie seine Verwendung als chromatographisches Trennmaterial.

Zur Modifizierung von Oberflächeneigenschaften werden zunehmend umweltfreundliche physikalisch-chemische Methoden verwendet. Unter den physikalisch-chemischen Verfahren sind solche Verfahren zu verstehen, die durch physikalische Einwirkungen chemische Reaktionen auf der Oberfläche bewirken können.

Zur Modifizierung von Oberflächeneigenschaften werden beispielsweise Plasmaverfahren eingesetzt.

DE 4227631 A1 offenbart ein Verfahren zur Oberflächenbehandlung. Der zu behandelnde Gegenstand wird einem Atmosphärendruckplasma ausgesetzt. Dabei wird der Gegenstand in einem Isolationsgefäß, das mit einem vorbestimmten Gas gespeist und auf seiner Außenweite mit Elektroden zur Spannungsanlegung und Erdung versehen ist, gerollt oder in der Schwebe gehalten. Das Atmosphärendruckplasma kommt beim Anlegen einer Spannung an die Elektroden zustande.

WO2007124921 beschreibt eine Behandlung von Schüttgut, das aus einer Vielzahl einzelner Teilchen besteht. Die Behandlung erfolgt mit einem physikalischen Plasma bei Atmosphärendruck, indem das physikalische Plasma mittels dielektrisch behinderter Gasentladungen zwischen zwei Elektroden erzeugt wird und die Teilchen des Schüttguts in vereinzelter Form durch den Bereich der Gasentladungen zwischen den Elektroden hindurchbewegt werden.

Bei den Verfahren zur Plasmabehandlung von Pulver oder Schüttgut nach dem Stand der Technik weisen die Pulver nach der Behandlung lediglich bessere Haftung zu einem anderen Material auf Der Stand der Technik beschreibt nur unspezifische Effekte auf der Oberfläche.

Man erzielt nur Reinigungs- bzw. Aktivierungsprozesse mit zeitlich begrenzter Beständigkeit und keine dauerhafte chemische Modifizierung.

Ein weiteres Verfahren zur Modifizierung von Oberflächeneigenschaften von Kunststoffen ist die Gasphasenfluorierung.

Bei der Gasphasenfluorierung wird die Polymeroberfläche dem Angriff von elementarem Fluor ausgesetzt. Je nach der Art der Reaktionsführung kommt es auch zu einem Angriff von Fluorwasserstoff oder dieser wird durch Entfernung aus dem Prozessgas unterdrückt (DE 10159940). Die Art der ablaufenden chemischen Reaktionen ist abhängig vom eingesetzten Polymer. Die Fluorierung erfolgt im Stand der Technik hauptsächlich, um das Permeationsverhalten, die Abriebfestigkeit, die chemische, mechanische und thermische Beständigkeit, das Klebeverhalten und die Benetzbarkeit zu beeinflussen.

Verfahren zur Fluorierung von Kunststoffoberflächen sind in der DE3511743, EP0566883, EP0738751 und DE102006013681 erwähnt. In DE 10159939 ist die Gasphasenfluorierung von Kunststoffpulvern erwähnt. Allerdings werden die erreichbaren Modifizierungseffekte nur mit "mehr oder weniger hydrophiler Oberfläche" beschrieben.

Noch ein weiteres Verfahren zur Modifizierung von Oberflächeneigenschaften von Kunststoffen ist die Flammenaktivierung.

Bei der Flammenaktivierung von Kunststoffen werden Kunststoffflachmaterialien (z.B. Kunststofffolien) jeweils einmal bzw. mehrmals unter einem Brenner durchgeführt. Die Prozessparameter Brennergeschwindigkeit, Brenngaszufuhr und Brenner-Substrat-Abstand müssen an den jeweiligen Kunststoff und seine geometrischen Maße angepasst werden. Spezielle Beflammungsverfahren stellen das Silicoater- bzw. das Pyrosilverfahren dar. Dabei werden Precursor wie z.B. siliziumorganische Verbindungen in das Brenngas eingeleitet und dort pyrolisiert, wobei die entstehenden Pyrolyseprodukte an der Substratoberfläche zu einer haftfesten dünnen Schicht aufwachsen (H.-J. Tiller, Th. Richter, Vakuum in Forschung und Praxis, 16 (2004) 2, 85 - 87). Durch Variation der Precursorverbindungen und deren Einspeisung in den Beflammungsprozess können die Oberflächeneigenschaften der Beschichtung gesteuert werden. Weitere Verfahrensparameter sind das verwendete Brenngas (Erdgas, Propangas, Butangas, Wasserstoff) und die Brennerkonstruktion (H.-J. Tiller, B. Magnus, R. Göbel, R. Musil, H. Winkelmann, A. Garschke, Materialien und Werkstoffe, Heft 12(1986), 1311 - 1320).

Mit der Flammenaktivierung wird im Ergebnis lediglich eine Beschichtung der Oberfläche des Kunststoffsubstrats erreicht und keine dauerhafte chemische Modifizierung des Substratmaterials selbst. Unter den Beflammungsbedingungen von Flachmaterialien lassen sich zudem nur sehr schlecht partikuläre Feststoffe und Pulvermaterialien verarbeiten.

Für die chemische Modifizierung einer polymeren Oberfläche, z.B. die Einführung funktioneller Gruppen, stehen auch nasschemische Verfahren zur Verfügung, bei denen die Reaktion in einer Flüssigphase stattfindet. Solche Verfahren haben aber bei der Behandlung von partikulären Feststoffen und insbesondere von feinkörnigen Pulvern den Nachteil, dass am Ende der Reaktion die Flüssigphase entfernt werden muss, um das Endprodukt zu erhalten.

Eine Aufgabe der vorliegenden Erfindung bestand in der Bereitstellung eines Verfahrens, mit dem man eine polymere Oberfläche eines partikulären Feststoffs, insbesondere eines sehr feinpartikulären Feststoffs oder Pulvers, dauerhaft chemisch modifizieren kann, ohne dass man dazu eine Flüssigphasenreaktion einsetzen muss. Die chemische Modifizierung sollte durch Waschprozesse nicht entfernt werden können und dauerhaft stabil bleiben.

Diese Aufgabe wird gelöst durch ein Verfahren nach Anspruch 1. Vorteilhafte Ausgestaltungen sind in den Unteransprüchen angegeben.

Die Erfindung betrifft ein Verfahren zur chemischen Modifizierung einer polymeren Oberfläche eines partikulären Feststoffs, bei dem man einen partikulären Feststoff mit einer polymeren Oberfläche bei Atmosphärendruck mit einem reaktiven Gas in Kontakt bringt und eine chemische Modifizierung an der polymeren Oberfläche erzeugt.

Das erfindungsgemäße Verfahren wird in Abwesenheit einer flüssigen Phase durchgeführt. Es eignet sich besonders zur Herstellung eines chromatographischen Trennmaterials.

Durch Wahl des reaktiven Gases, der Art der polymeren Oberfläche und der Reaktionsbedingungen kann die Art der chemischen Modifizierung gezielt und definiert gesteuert werden. Die genannten Parameter werden nachfolgend in der Beschreibung erläutert.

Die Prozessbedingungen werden im Verfahren so angepasst, dass die chemische Reaktion auf der polymeren Oberfläche über die Temperatur an der Oberfläche gezielt gesteuert werden kann. Die Reaktionsgeschwindigkeitskonstante der chemischen Reaktion ist temperaturabhängig. Eine erwünschte chemische Reaktion mit höherer Aktivierungsenergie kann durch die Wahl einer höheren Temperatur bewirkt werden oder auch bevorzugt stattfinden. Soll die erwünschte chemische Modifizierung durch eine Reaktion mit niedriger Aktivierungsenergie erfolgen, so wird durch die Einstellung einer niedrigeren Temperatur diese Reaktion gegenüber unerwünschten Reaktionen mit vergleichsweise höherer Aktivierungsenergie begünstigt.

Der Begriff "chemische Modifizierung" bedeutet, dass die polymere Oberfläche des partikulären Feststoffs im Vergleich zum Ausgangszustand, d.h. dem Zustand vor Durchführung des erfindungsgemäßen Verfahrens, chemisch bzw. durch eine chemische Reaktion verändert wurde. Die chemische Modifizierung bzw. Reaktion ist oberflächlich, d.h. sie findet nur an der Oberfläche des partikulären Feststoffs bzw. nur an der polymeren Oberfläche statt. Es handelt sich bei der chemischen Modifizierung nicht um eine Beschichtung. Vielmehr wird durch die Modifizierung das Polymer der Oberfläche selbst in seiner chemischen Struktur verändert.

Im Speziellen bedeutet der Begriff "chemische Modifizierung", dass kovalente chemische Bindungen an der Oberfläche des Polymers erzeugt werden.

Noch spezieller bedeutet der Begriff "chemische Modifizierung", dass funktionelle Gruppen erzeugt werden, die kovalent an die polymere Oberfläche gebunden sind. Ganz speziell bedeutet der Begriff "chemische Modifizierung", dass an der Oberfläche funktionelle Gruppen am Rückgrat der Makromoleküle des Polymers erzeugt werden.

Im vorliegenden Verfahren beträgt die Partikelgröße des eingesetzten partikulären Feststoffs 3 bis 1000 $\mu$m. In der vorliegenden Erfindung werden partikuläre Feststoffe aus Partikeln dieser Größenordnung auch als Pulver bezeichnet. Die partikulären Feststoffe können eine Größenverteilung aufweisen oder aus Partikeln gleicher Größe bestehen.

Die Partikel des partikulären Feststoffs können vollständig aus einem Polymer bestehen. Der partikulärer Feststoff ist dann in seinem Aufbau homogen.

Alternativ können die Partikel des partikulären Feststoffs eine Schale aus Polymer aufweisen und der Kern kann aus einer anderen Substanz bestehen, die kein Polymer sein muss. Es handelt sich hierbei um Kern-Schale Partikel. Der Kern kann aus beliebigen anderen Substanzen bestehen. Die Schale kann beliebig dünn sein.

In noch einer Variante kann die Oberfläche des partikulären Feststoffs auch nur teilweise aus Polymer bestehen.

Der Begriff "polymere Oberfläche" bedeutet, dass die Oberfläche des partikulären Feststoffs teilweise oder vollständig aus einem Polymer besteht. Der Begriff "Polymer" bezeichnet in der vorliegenden Erfindung eine chemische Verbindung aus Ketten- oder verzweigten Molekülen (Makromolekülen), die wiederum aus gleichen oder gleichartigen Einheiten (den sogenannten Monomeren) bestehen.

Das Polymer kann thermoplastisch aber auch duroplastisch oder elastisch sein. Das Polymer ist auch ansonsten in seinen Eigenschaften nicht beschränkt. Es können Polymere mit einem organischen Grundgerüst eingesetzt werden. Gängige Polymere wie Styrolpolymere, beispielsweise Polystyrol, Polyolefine, wie Polyethylen oder Polypropylen, Polyester, wie Polyethylenterephthalat, Polyamide, Vinylpolymere, Polysulfide, Polysulfone, Polysaccharide wie Cellulose, Polysiloxane, Polysilane, Polyphosphazene, Polyphosphate, Polysulfazene sowie entsprechende Copolymere, Terpolymere usw. können modifiziert werden.

In einer besonders vorteilhaften Ausführungsform besteht die polymere Oberfläche aus einem vernetzten oder unvernetzten Polyolefin, einem Styrolpolymer, einem Polymer auf Basis von Divinylbenzol oder einem Vinylpolymer.

Der im Verfahren eingesetzte partikuläre Feststoff ist porös.

Der Begriff "reaktives Gas" ist gemäß der Erfindung so zu verstehen, dass sowohl Gase umfasst sind, die aus einer reinen Substanz bestehen, als auch Gasgemische.

Das reaktive Gas ist nicht besonders beschränkt. Beispielhaft zu nennen sind Luft, Sauerstoff, Stickstoff, Wasserstoff, Ammoniak, Kohlendioxid, Kohlenmonoxid, Stickstoffmonoxid, Stickstoffdioxid, Schwefelhexafluorid, Kohlenwasserstoffe, halogenierte Kohlenwasserstoffe, niedermolekulare organische Verbindungen, metallorganische Verbindungen u.a. der Elemente des Siliziums, Aluminiums und Titans, Verbindungen des Phosphors, des Siliziums sowie des Bors, oder einer Mischung aus zwei oder mehr dieser Gase. Das reaktive Gas wird je nach der erwünschten chemischen Modifikation oder der erwünschten einzubringenden funktionellen Gruppe ausgewählt.

Für eine Carboxylierung kann beispielsweise Sauerstoff als reaktives Gas verwendet werden. Durch den Einsatz von halogenierten Kohlenwasserstoffen als Bestandteil des reaktiven Gases können die entsprechenden Halogenatome bzw. halogenierte Atomgruppen in die Polymerstruktur eingeführt werden. Ammoniak als Bestandteil des reaktiven Gases kann u.a. zur Einführung von Aminogruppen benutzt werden.

Bei Gasen, die unter Normaltemperaturen reaktionsträge sind, wie z.B. Stickstoff oder Kohlendioxid müssen die Reaktionsbedingungen, insbesondere die Temperatur, so gewählt werden, dass man eine chemische Reaktion zwischen dem Gas und der Polymer an der Oberfläche erzielt. Besondere Reaktionsbedingungen sind bei den speziellen Ausführungsformen des Verfahrens beschrieben.

Gegenstand der Erfindung sind insbesondere Verfahren zur Herstellung oberflächenfunktionalisierter Polymerpulver.

Die funktionellen Gruppen sind nicht besonders beschränkt. Beispielsweise besteht die chemische Modifizierung in der Einführung mindestens einer funktionellen Gruppe, die beispielsweise ausgewählt ist aus Alkyl-, Alkenyl-, Alkinyl-, Hydroxyl-, Thiol-, Amino-Nitro-, Nitroso-, Nitril-, Isonitril-, Cyanat-, Isocyanat-, Sulfoxid-, Sulfon-, Sulfonsäure-, Aldehyd-, Keton-, Carboxyl-, Amid-, Estergruppen. Funktionelle Gruppen sind auch solche, die mindestens eines der Elemente Wasserstoff Kohlenstoff, Stickstoff, Sauerstoff, Schwefel, Phosphor, Bor, Silizium, Aluminium, Titan, Fluor, Chlor, Brom und/oder Jod enthalten.

Wie erwähnt, ist durch die chemische Modifizierung an der Oberfläche die chemische Struktur des Polymers im Gegensatz zum Ausgangszustand geändert. Eine solche Änderung der chemischen Struktur ist mit gängigen analytischen Verfahren messbar, wie z.B. XPS (X-ray Photoelectron Spectroscopy)-Analyse, ATR(Attenuated Total Reflection)-IR-Spektroskopie, Sekundärionen-Massenspektrometrie, wie SIMS-TOF (Secondary-Ion-Mass Spectroscopy-Time-of-flight), Zetapotentialmessung und üblichen chemischen Nachweisreaktionen.

Die mit dem erfindungsgemäßen Verfahren erzeugte chemische Modifizierung ist dadurch gekennzeichnet, dass sie dauerhaft ist.

Der Begriff "dauerhaft" bedeutet nach einer Definition, dass die mit dem erfindungsgemäßen Verfahren erzeugte chemische Modifizierung bei Behandlung des chemischen modifizierten partikulären Feststoffs mit Lösungsmittel nicht entfernt wird. Wenn durch die chemische Modifizierung" funktionelle Gruppen erzeugt werden, die kovalent an die polymere Oberfläche gebunden sind, so werden diese durch die Einwirkung von Lösungsmittel nicht von der Oberfläche entfernt.

Bei der Behandlung mit Lösungsmittel, nachfolgend auch als Waschprozess bezeichnet, wird der chemisch modifizierte partikuläre Feststoff vorzugsweise in einer definierten Reihenfolge in verschiedenen Lösungsmitteln mit unterschiedlicher Polarität, Hydrophilie und Lösevermögen (beispielsweise Wasser, Aceton, n-Heptan, Aceton, Wasser) suspendiert und anschließend abfiltriert. Der Waschprozess wird durch chemische Analyse des Filtrates kontrolliert. Die Wahl der Lösungsmittel ist abhängig vom eingesetzten partikulären Feststoff und vom angewandten Verfahren zur chemischen Modifizierung der Oberfläche des partikulären Feststoffes.

In einer weiteren Definition bedeutet der Begriff "dauerhaft", dass die mit dem erfindungsgemäßen Verfahren erzeugte chemische Modifizierung bei einer thermischen Behandlung des chemischen modifizierten partikulären Feststoffs, einer sogenannten Ausgasuntersuchung, nicht entfernt wird. Die Ausgasuntersuchung kann z.B. durch Erhitzen des chemischen modifizierten partikulären Feststoffs und der Analyse der flüchtigen Produkte mittels Headspace-Gaschromatographie erfolgen.

In einer bevorzugten Methode stellt man die Dauerhaftigkeit der chemischen Modifizierung fest, indem man die zuvor erwähnte Behandlung mit Lösungsmittel und die oben erwähnte Ausgasuntersuchung kombiniert.

Es ist möglich, dass bei der Behandlung mit Lösungsmittel bzw. bei der Ausgasuntersuchung zunächst chemisch nicht gebundene Bestandteile gefunden werden. Solche chemisch nicht gebundenen Bestandteile stellen aber keine chemische Modifizierung im Sinne der Erfindung dar. Die mit dem erfindungsgemäßen Verfahren erzeugte chemische Modifizierung ist in dem Sinne dauerhaft, dass sie bei einer Behandlung mit Lösungsmittel und/oder bei einer thermischen Behandlung (Ausgasuntersuchung) nicht von der Oberfläche entfernbar ist.

Die Behandlung mit Lösungsmittel (Waschprozess) und die Ausgasuntersuchung werden vorzugsweise von einer gleichzeitigen analytischen Charakterisierung des chemischen Oberflächenzustandes des partikulären Feststoffes begleitet. Die analytische Charakterisierung des chemischen Oberflächenzustandes kann beispielsweise mit XPS oder IR-Spektroskopie erfolgen. Durch die Oberflächenanalyse wird zum einen nachgewiesen, dass durch das erfindungsgemäße Verfahren eine chemische Veränderung an der Oberfläche erfolgte. Weiterhin kann man nachweisen, ob noch Änderungen des Oberflächenzustandes nach einer Ausgasuntersuchung bzw. nach Durchführung eines Waschprozesses feststellbar sind. Wenn auf der Oberfläche des partikulären Feststoffs chemische Modifizierungen nachweisbar sind, die auch nach Durchführung einer Ausgasuntersuchung und/oder nach Durchführung eines Waschprozesses nicht mehr verändern, ist der Nachweis einer dauerhaften chemischen Modifizierung erbracht.

Bezogen auf den Stand der Technik, zeichnet sich diese Erfindung dadurch aus, dass an der Oberfläche nicht nur ein Reinigungs- bzw. Aktivierungsprozess mit zeitlich begrenzter Beständigkeit erfolgt, sondern die chemische Veränderung der Polymeroberfläche langlebig ist und somit über einen langen Zeitraum stabil bleibt. Bei den erfindungsgemäßen Verfahren wird die polymere Oberfläche eines partikulären Feststoffs dauerhaft, definiert, selektiv und gezielt chemisch verändert. Mit den erfindungsgemäßen Verfahren können u.a. gezielte chemische Reaktionen (wie z.B. eine Carboxylierung) an der polymeren Oberfläche vorgenommen werden.

Im Stand der Technik müssen die Materialien insbesondere bei Plasmaverfahren immer kurzfristig nach der Behandlung weiterverarbeitet werden, da der erzielte Behandlungseffekt nachlässt. Die vorliegende Erfindung zeichnet sich gegenüber dem Stand der Technik dadurch aus, dass gezielt selektiv und spezifisch chemische Reaktionen an der Polymerstruktur durchgeführt werden. Wenn funktionelle Gruppen eingeführt werden, so wird die Art der funktionellen Gruppen gesteuert.

Laut Stand der Technik werden bestimmte Funktionalitäten nur durch nasschemische Reaktionen eingeführt, beispielsweise Hydroxylgruppen durch Umsetzung der unspezifischen Funktionalisierungen aus der Niederdruckplasmabehandlung durch Reduktion mit Diboran in Tetrahydrofuran (J. Friedrich "Funktionalisierung von Polymeroberflächen mit anschließender Pfropfung und Derivatisierung" Vortrag; http://www.unileipzig.de/~iom/muehlleithen/2007/friedrich.pdf; Stand vom 04.11.2009).

Klassischen Pulvermaterialien werden durch Emulsionspolymerisation entsprechender Monomere wie Styrol / Divinylbenzol, Acrylamid / Methylmethacrylat usw. hergestellt ["Column Handbook for Size Exclusions Chromatography", Chi-san Wu, Academic Press 1999]. Durch nasschemische polymeranaloge Umsetzungen mit konzentrierter Schwefelsäure können dann sulfogruppenhaltige Trennmaterialien hergestellt werden ["Grundlagen der Synthese von Polymer", Joachim Ulbricht, 2. Auflage, Hüthig Wepf Verlag 1992]. Die Einführung von Aminogruppen ist mit einer zweistufigen polymeranalogen Umsetzung über die Chlormethylen-Funktionalisierung und anschließender Reaktion mit Aminen möglich.

Im Gegensatz dazu sind die Verfahren der vorliegenden Erfindung weniger aufwändig. Es werden physikalisch-chemische Verfahren eingesetzt, die trocken durchgeführt werden. Es wird bei Ihnen keine Flüssigphase, wie z.B. Lösungsmittel, verwendet. Mit den Verfahren können polymeranaloge Umsetzungen durchgeführt werden, die in der Flüssigphase, d.h. auf nasschemischem Weg, wie im Stand der Technik beschrieben, nur sehr aufwendig durchgeführt werden können.

Spezielle Verfahrensgestaltungen, die zur Herstellung der erfindungsgemäßen partikulären Feststoffe eingesetzt werden können, sind nachfolgend beschrieben. Diese speziellen Ausführungsformen können mit den zuvor genannten Merkmalen beliebig kombiniert werden.

A) Verfahren in einer thermischen Spritzvorrichtung

In einer Variante des erfindungsgemäßen Verfahrens führt man die chemische Modifizierung in einer thermischen Spritzvorrichtung durch, wobei man in der Vorrichtung einem Reaktionsgemisch aus reaktivem Gas und partikulärem Feststoff Energie aus einer Verbrennungsflamme, Plasmaflamme, einem Lichtbogen oder einem Laser zuführt, eine chemische Modifizierung an der polymeren Oberfläche des partikulären Feststoffs erzeugt, und anschließend den partikulären Feststoff abkühlt und in partikulärer Form zurückgewinnt.

Der Begriff thermische Spritzvorrichtung (nachfolgend auch "Spritzvorrichtung") bezieht sich auf eine Vorrichtung zum thermischen Spritzen. Das thermische Spritzen umfasst nach dem Stand der Technik Verfahren, bei denen Spritzzusätze innerhalb oder außerhalb von Spritzgeräten an-, auf- oder abgeschmolzen und auf vorbereitete Substratoberflächen aufgeschleudert werden. Die Oberflächen werden dabei nicht aufgeschmolzen. Je nach Verfahren werden dabei unterschiedliche Temperaturen als auch Spritzgeschwindigkeiten erreicht, die den Beschichtungsprozess maßgeblich charakterisieren (siehe auch die Definition des thermischen Spitzens nach DIN EN 657).

Mit dem Verfahren thermisches Spritzen werden wärmeschmelzbare Materialien in Pulverform zur Beschichtung von Substratmaterialien eingesetzt (DE69110541 T2, EP2145974A1, EP2128300A1, AT194605, CH325202). Dies können auch Polymerpulver sein. Durch die Hitze wird das Material aufgeweicht und bildet beim Aufschlagen auf die Substratoberfläche und anschließenden Abkühlen eine stabile Beschichtung.

Das vorliegende Verfahren ist kein thermisches Spritzverfahren im oben genannten Sinne, denn es wird kein Beschichtungsprozess durchgeführt. Der im Verfahren eingesetzte partikuläre Feststoff wird in der Verbrennungsflamme, Plasmaflamme, dem Laser oder dem Lichtbogen nicht aufgeschmolzen und anschließend auf eine Oberfläche gesprüht, wo er eine Beschichtung ausbildet. Stattdessen wird die Energie aus einer Verbrennungsflamme, Plasmaflamme, einem Laser oder einem Lichtbogen genutzt, um eine chemische Modifizierung an der polymeren Oberfläche des partikulären Feststoffs zu erzeugen. Als zweiter Reaktant dient dabei ein reaktives Gas, dem auch die Funktion eines Trägergases für den Transport des partikulären Feststoffs durch die Spritzvorrichtung zukommt. Nach der chemischen Modifizierung an der polymeren Oberfläche des partikulären Feststoffs wird dieser in partikulärer Form zurückgewonnen.

Der Ausdruck "in partikulärer Form zurückgewonnen" bedeutet, dass der eingesetzte partikuläre Feststoff nach Durchführung des Verfahrens in Form voneinander getrennter Partikel vorliegt bzw. in Form voneinander getrennter Partikel zurück gewonnen bzw. erhalten wird. Nach der Zurückgewinnung haften die Partikel an keiner Oberfläche an. Dies steht im Gegensatz zu den thermischen Spritzverfahren nach dem Stand der Technik, bei denen Partikel aufgeschmolzen und auf eine Oberfläche aufgebracht werden, wo sie einen Beschichtungsfilm bilden.

In dieser Ausführungsform des erfindungsgemäßen Verfahrens wird eine thermische Spritzvorrichtung somit nicht für ihren ursprünglichen Verwendungszweck, zum thermischen Spritzen, eingesetzt, sondern sie wird gezielt zur Durchführung einer chemischen Reaktion verwendet. Der Gegenstand dieser Ausführungsform des Verfahrens ist insbesondere der Einsatz einer thermischen Spritzvorrichtung zur chemischen Modifizierung von Polymerpulver an seiner Oberfläche, wobei nach dem Passieren der thermischen Spritzvorrichtung das Pulver in Pulverform zurückgewonnen wird.

Im Gegensatz zum Stand der Technik wird bei der vorliegenden Erfindung eine Verformung der Pulverpartikel verhindert oder zumindest weitgehend verhindert und durch die Reaktion zwischen dem eingesetzten reaktiven Gas und dem Polymerpulver wird die Pulveroberfläche dauerhaft chemisch verändert.

Als thermische Spritzvorrichtung können eine Flammspritzvorrichtung, eine Plasmaspritzvorrichtung, eine Laserspritzvorrichtung oder eine Vorrichtung zum Lichtbogenspritzen eingesetzt werden, wobei eine Flammspritzvorrichtung bevorzugt ist.

In einer Flammspritzvorrichtung wird einer Flamme, die aus Luft oder Sauerstoff und einem Brenngas, vorzugsweise Acetylen, Propan, Ethen oder Wasserstoff, gezündet wird, ein Reaktionsgemisch aus reaktivem Gas und partikulärem Feststoff zugeführt. Das reaktive Gas dient gleichzeitig als Trägergas für den partikulären Feststoff. Besonders bevorzugte Reaktivgase/Trägergase sind Stickstoff, Edelgase, Kohlendioxid, Luft, Wasserstoff, eines der genannten Brenngase, oder Mischungen davon.

In einer vorteilhaften Ausuhrungsform wird das Gemisch aus reaktivem Gas und partikulärem Feststoff aus einer mittigen Düse ausgerührt und die Flamme umgibt einen aus dieser Düse austretenden Strahl aus Feststoff und Reaktivgas ringförmig. Dies wird erreicht, indem man das Brenngas/Luft- bzw. Brenngas/Sauerstoffgemisch aus einer ringförmigen Düse ausführt, welche die mittige Düse ringförmig umgibt. Beim Ausströmen aus der mittigen Düse kommt das Gemisch aus reaktivem Gas und partikulärem Feststoff mit der Flammenwärme in Kontakt und eine Reaktion zwischen reaktivem Gas und polymerer Oberfläche des partikulären Feststoffs wird in Gang gesetzt, die zur chemischen Modifizierung an der polymeren Oberfläche des partikulären Feststoffs führt.

Die Ströme aus Sauerstoff/Brenngas einerseits und Feststoff/Reaktivgas andererseits werden so geführt, dass eine thermische Zersetzung des Polymers weitgehend bis vollständig vermieden wird. Dies kann erreicht werden, indem man durch den Volumenstrom des Reaktivgases, das gleichzeitig Trägergas für den partikulären Feststoff ist, die Verweilzeit des partikulären Feststoffs in Flammennähe steuert und wenn nötig durch Erhöhung des Volumenstroms die Verweilzeit verkürzt. Der Trägergasstrom dient dabei gleichzeitig der Wärmeabfuhr.

In einer speziellen Variante des Flammspritzens wird durch die Verwendung einer speziellen Düse ein direkter Kontakt der polymeren Oberfläche mit der Flamme vermieden und ein indirekter Wärmeübergang von der Flamme in den partikulären Feststoff gewährleistet. Die Flamme des Brenngasgemisches wird nicht kompakt, sondern ringförmig über mehrere Öffnungen am Düsenausgang erzeugt. In der Mitte der Düse wird der partikuläre Feststoff über ein Trägergas in den Prozess eingeführt. Um zu verhindern, dass der Feststoff mit der Flamme in direkten Kontakt tritt, befindet sich zwischen Flamme und Feststoff eine Abschirmung, die durch ein eingeleitetes Kühlgas aufgebaut wird. Als Kühlgas wird vorzugsweise Druckluft verwendet. Alternativ können aber auch inerte Medien wie Stickstoff oder Argon zum Einsatz kommen.

Die Oberflächenmodifizierung auf der polymeren Oberfläche des partikulären Feststoffs wird durch die eingetragene thermische Energie ermöglicht und wird über das eingesetzte Trägergas und die Verbrennungsgase gesteuert.

Die Art der eingeführten funktionellen Gruppen kann vom eingesetzten Polymermaterial abhängig sein, da die chemische Struktur des Ausgangsmaterials bei bereits vorhandenen funktionellen Gruppen, wie z.B. Methyl-, Hydroxyl-, Aminogruppen, Einfluss auf die ablaufende chemische Reaktion an der polymeren Oberfläche haben kann.

Bevorzugt werden Carboxyl-, Hydroxyl-, Carbonyl oder Nitrogruppen dauerhaft kovalent an die polymere Oberfläche gebunden.

Nach Durchführung der chemischen Reaktion an der polymeren Oberfläche des partikulären Feststoffs wird der partikuläre Feststoff abgekühlt und in partikulärer Form zurückgewonnen.

Der partikuläre Feststoff wird vorzugsweise abkühlt, indem man ihn in ein Kühlmedium leitet. Als Kühlmedium werden bevorzugt Luft oder Wasser eingesetzt.

Es können kommerziell erhältliche Flammspritzvorrichtungen oder Flammpritzpistolen eingesetzt werden, wie z.B. das Flammspritzsystem Castodyn DS 8000 von Castolin & Eutectic, oder die Flammspritzpistole Duroplast 115 der Firma Messer Griesheim.

Alternativ zu einer Flammspritzvorrichtung kann im erfindungsgemäßen Verfahren eine Plasmaspritzvorrichtung eingesetzt werden. In einer Plasmaspritzvorrichtung wird ein Lichtbogen zwischen einer düsenförmigen Wolframkathode und einer weiteren Elektrode gezündet. Dadurch wird ein kontinuierlich fließender Strom eines ionisierten Gases (Plasma) erhitzt. Als Gase werden vorzugsweise Argon, Helium, Stickstoff, Wasserstoff oder deren Gemische verwendet.

Dem Reaktionsgemisch aus reaktivem Gas und partikulärem Feststoff wird Energie aus dem heißen Plasmastrom zugeführt und die entsprechende chemische Reaktion in Gang gesetzt. Es können kommerziell erhältliche Plasmaspritzvorrichtungen eingesetzt werden.

In einer weiteren alternativen Ausführungsform kann eine Laserspritzapparatur eingesetzt werden. Darin wird dem Reaktionsgemisch durch einen Laserstrahl Energie zugeführt.

Schließlich kann in noch einer weiteren Ausführungsform auch eine Vorrichtung zum Lichtbogenspritzen eingesetzt werden.

Der partikuläre Feststoff kann als trockenes Pulver, Paste oder Dispersion eingesetzt werden. Bevorzugt wird er als trockenes Pulvermaterial eingesetzt. Die Partikelgröße des Pulvers beträgt vorzugsweise 5 - 1000 $\mu$m, mehr bevorzugt 100 - 500 $\mu$m. Zur Verbesserung der Verarbeitungsfähigkeit (z.B. Rieselfähigkeit, Schmelzverhalten) können Additive bzw. Hilfsstoffe oder Füllstoffe (z.B. Natriumsulfat) eingesetzt werden.

B) Plasmaverfahren

Die in der vorliegenden Erfindung verwendeten Verfahren sind in einer weiteren Ausführungsform Plasmaverfahren. Unter einem Plasma versteht man ein Gemisch aus freien Elektronen, positiven Ionen und Neutralteilchen eines Gases, die sich durch Wechselwirkung untereinander und mit Photonen in verschiedenen Energie- und Anregungszuständen befinden (H. Drost, Plasmachemie, Akademie Verlag, Berlin 1978, S. 20/21;; H. Rutscher, Plasmatechnik, Hanser Verlag, München, 1984 S. 13/14; G. Franz, Oberflächentechnik mit Niederdruckplasmen, Springer Verlag, Berlin-Heidelberg, 1994). Technisch lassen sich Plasmen allgemein durch Zufuhr hoher Energie erzeugen. Methoden der Energiezufuhr sind z.B. die thermische Anregung, chemische und nukleare Reaktionen, Strahlungsanregungen, die Anregung durch elektrische Felder (Entladung) und die Anregung durch elektromagnetische Felder (Entladung). So kann die Energiezufuhr z.B. in Form von Lichtbögen, Glimmentladungen, Lasern, Flammen oder Stoffwellen erfolgen. Plasmaverfahren sind in der Literatur eingehend beschrieben, wie unter anderem bei Michael A. Lieberman, Allan J. Lichtenberg: Principles of Plasma Discharges and Materials Processing. Wiley, New Jersey 2005; R. J. Goldston, P. H. Rutherford: Plasmaphysik. Eine Einführung. Vieweg, Braunschweig 1998; K.-H. Spatschek: Theoretische Plasmaphysik. Eine Einführung. Teubner, Stuttgart 1990; F. F. Chen: Introduction to Plasma Physics and Controlled Fusion. Plenum Press, New York 1983.

Bei einem Plasmaverfahren gemäß der Erfindung führt man die chemische Modifizierung in einem Plasmareaktor in einem elektrischen Wechselfeld durch, wobei man den partikulären Feststoff in die Reaktionszone eines Plasmareaktors einführt, ein reaktives Gas zuführt, und auf der polymeren Oberfläche des partikulären Feststoffs durch Vorgabe des Reaktorstroms und der Reaktorspannung sowie durch Anlegen einer kontinuierlichen oder gepulsten Entladung die Temperatur steuert, beispielsweise erhöht, so dass die polymere Oberfläche durch Reaktion mit dem reaktiven Gas chemisch modifiziert wird. Das reaktive Gas kann mit einem konstanten Gasstrom zugeführt werden.

Das in der vorliegenden Erfindung bevorzugt verwendete Plasmaverfahren ist eine Barriereentladung.

Die Reaktionszone ist der Bereich des Plasmareaktors, in dem Plasmabedingungen herrschen.

Im Plasmaverfahren erfolgt eine Aktivierung der Polymermoleküle auf der polymeren Oberfläche durch die Einwirkung angeregter Teilchen, z.B. elektrisch geladenen Teilchen, und die dadurch bewirkte Bildung chemisch reaktiver Zentren an der Polymerkette. Diese reagieren mit den reaktiven Spezies des anderen Reaktanten. Die erzeugte polymeranaloge Umsetzung ist gekennzeichnet dadurch, dass sie dauerhaft ist und somit die eingeführten funktionellen Gruppen chemisch an die Polymerketten gebunden sind.

Bei dem Plasmaverfahren wird ein reaktives Gas zugegeben. Das reaktive Gas ist nicht besonders beschränkt. Beispielhaft zu nennen sind Luft, Sauerstoff Stickstoff, Wasserstoff, Ammoniak, Kohlendioxid, Kohlenmonoxid, Stickstoffmonoxid, Stickstoffdioxid, Schwefelhexafluorid, Kohlenwasserstoffe, halogenierte Kohlenwasserstoffe, niedermolekulare organische Verbindungen, metallorganische Verbindungen u.a. der Elemente des Siliziums, Aluminiums und Titans, Verbindungen des Phosphors, des Siliziums sowie des Bors, oder einer Mischung aus zwei oder mehr dieser Gase. Bei Normalbedingungen reaktionsträge Gase werden durch die Versetzung in den Plasmazustand in eine reaktive Form gebracht. Das reaktive Gas wird vorzugsweise mit einem Gasstrom von 10 - 20 l/h zugeführt.

Die Prozessbedingungen werden so angepasst, dass die chemischen Reaktionen auf der Oberfläche über die Temperatur im Plasmareaktor und auf der polymeren Oberfläche gezielt gesteuert werden können. Die Reaktionsgeschwindigkeitskonstante der chemischen Reaktion ist temperaturabhängig (Arrhenius-Gleichung). Reaktionen mit höherer Aktivierungsenergie können durch die Wahl höherer Temperaturen bevorzugt stattfinden. Reaktionen mit niedriger Aktivierungsenergie werden durch niedrigere Temperaturen gegenüber Reaktionen mit vergleichsweise höherer Aktivierungsenergie begünstigt.

Die Reaktionstemperatur ist prinzipiell frei wählbar, wird aber dem jeweils verwendeten polymeren Feststoff angepasst, so dass eine thermische Schädigung vermieden wird. In speziellen Ausführungsformen wird die Reaktion bei einer Temperatur von 20°C bis 60°C durchgeführt, noch mehr bevorzugt bei Raumtemperatur.

Nachfolgend werden vorteilhafte Prozessparameter genannt, die in jeder Kombination miteinander und mit den zuvor genannten Parametern kombiniert werden können.

Die Reaktorspannung beträgt in einer vorteilhaften Ausführungsform 0,1 - 10 $kV_{eff}$.

Der Reaktorstrom beträgt in einer vorteilhaften Ausführungsform 1 - 2000 $mA_{eff}$ und ist vorzugsweise konstant.

Unter dem Effektivwert (allg. $s_{eff}$) versteht man in der Elektrotechnik den quadratischen Mittelwert eines zeitlich veränderlichen Signals. Zu einer Wechselgröße (Wechselstrom, Wechselspannung) gibt der Effektivwert denjenigen Wert einer Gleichgröße (Gleichstrom, Gleichspannung) an, die an einem ohmschen Verbraucher in einer vorgegebenen Zeit dieselbe Energie, also auch dieselbe Leistung, umsetzt. Der Effektivwert eines Wechselstroms oder einer Wechselspannung entspricht dem Gleichstrom- oder -spannungswert, der in einem ohmschen Widerstand die gleiche Leistung (Wärme) erzeugt wie der über volle Perioden gemittelte Wechselstrom bzw. Wechselspannung.

$$s_{\text{eff}} \approx \sqrt{\frac{1}{n}\sum_{i=1}^{n} x_i^2} = \sqrt{\frac{1}{n}\left(x_1^2 + x_2^2 + x_3^2 \cdots + x_n^2\right)}$$

Die Prozesszeit bei dem Plasmaverfahren beträgt im Allgemeinen 1 Nanosekunde bis mehrere Minuten.

Auch durch die Art der Entladung kann die Temperatur an der Polymeroberfläche gesteuert werden. Das Wechselfeld kann kontinuierlich oder diskontinuierlich (gepulst) angelegt werden, je nach gewünschtem Energieeintrag und gewünschter Temperatur.

Ein gepulstes Wechselfeld hat sich zur Steuerung des Energieeintrages in die Reaktionszone als besonders vorteilhaft erwiesen. Der Energieeintrag und damit die Temperatur können durch das Tastverhältnis des gepulsten Feldes gesteuert werden. Das sogenannte Tastverhältnis bei gepulsten Wechselfeldern ist folgendermaßen definiert:

$$g\ [\%] = (t_i/T)\ x\ 100$$

mit g = Tastverhältnis, $t_i$ = Impulsdauer und T = Periodendauer.

In einer Ausführungsform der vorliegenden Erfindung beträgt das Tastverhältnis 0,1% bis 10%, vorzugsweise 0,1% - 5%.

Die HV-Pulszeiten innerhalb des Prozesses bleiben vorzugsweise konstant. Die Frequenzanpassung ist vorzugsweise dynamisch.

In einer weiteren vorteilhaften Ausführungsform erzeugt man eine homogene Verteilung der Leuchterscheinungen in der Plasmazone durch eine dielektrische Abschirmung zumindest einer der Elektroden. Die dielektrische Abschirmung kann in Form einer dielektrischen Barriere auf der Elektrode gebildet sein.

Der erfindungsgemäße Aufbau kann derart gewählt werden, dass pulverförmiger partikulärer Feststoff kompakt, ohne Bewegung während der Reaktion, in die Reaktionszone gepackt werden oder durch die Reaktionszone bewegt werden kann, je nach Korngröße bzw. Korngrößenverteilung. Es ist keine kontinuierliche Förderung des Feststoffs mittels Fördereinrichtungen im Reaktionsraum notwendig. Eine Packung im Reaktor bietet sich nur an, wenn die Partikelgröße größer als ca. 150 $\mu$m ist.

Für kleinere Korngrößen als ca. 150 $\mu$m ist die Bewegung durch die Reaktionszone gegenüber dem statischen Betrieb bevorzugt.

In einer Ausführungsform des Verfahrens werden dielektrische partikuläre Feststoffe behandelt. Diese laden sich im elektrischen Feld auf Bei geringer Packungsdichte, Materialdichte und Partikelgrößen erfolgt eine Ausrichtung der Partikeloberfläche bezüglich der Elektroden ohne zusätzliche Rütteltechnik.

Die polymere Oberfläche des partikulären Feststoffs kann aus den eingangs bei der allgemeinen Beschreibung des Verfahrens genannten Polymeren bestehen.

Eine besonders bevorzugten Ausführungsform des Verfahrens im Plasmareaktor ist derart gestaltet, dass die polymere Oberfläche aus einem vernetzten oder unvernetzten Polyolefin, Styrolpolymer, Polymer auf Basis von Divinylbenzol oder Vinylpolymer besteht, das reaktive Gas Sauerstoff enthält und die chemische Modifizierung in der Einführung von Carboxylgruppen an der polymeren Oberfläche besteht.

Noch eine besonders bevorzugte Ausführungsform des Verfahrens im Plasmareaktor ist derart gestaltet, dass man die Reaktorspannung auf einen effektiven Wert von 0,1 bis 10 $kV_{eff}$ und den Reaktorstrom auf einen effektiven Wert von 1 - 2000 $mA_{eff}$ einstellt, und eine gepulste Entladung mit einem Tastverhältnis von 0,1 - 10%, vorzugsweise 0,1 - 5% anlegt.

Die Geometrie des Plasmareaktors ist nicht besonders beschränkt, wobei sich aber eine zylindrische Elektrodengeometrie als vorteilhaft erwiesen hat. Hierbei umgibt eine zylindrische äußere Elektrode eine ebenfalls zylindrische innere Elektrode. Die äußere Elektrode hat die Form eines Hohlzylinders und die innere Elektrode kann als Holzylinder oder als massiver Zylinder ausgebildet sein.

In einem weiteren Aspekt betrifft die vorliegende Erfindung auf einen partikulären Feststoff mit einer Partikelgröße von 3 - 1000 Mikrometer und einer Oberfläche aus einem Polymer, der dadurch gekennzeichnet ist, dass die Oberfläche durch Erzeugung kovalent an die polymere Oberfläche gebundener funktioneller Gruppen chemisch modifiziert ist.

In der vorliegenden Erfindung werden partikuläre Feststoffe aus Partikeln mit einer Partikelgröße von 3 - 1000 Mikrometer auch als Pulver bezeichnet. Die partikulären Feststoffe können eine Größenverteilung aufweisen oder aus Partikeln gleicher Größe bestehen. Ferner können die Partikel des partikulären Feststoffes, wie schon bei der Beschreibung des Verfahrens erwähnt, vollständig aus dem Polymer bestehen. Alternativ können die Partikel des partikulären Feststoffs eine Schale aus Polymer aufweisen und der Kern kann aus einer anderen Substanz bestehen, die kein Polymer sein muss. Es handelt sich hierbei um Kern-Schale Partikel. Der Kern kann aus beliebigen anderen Substanzen bestehen. In noch einer Variante kann die Oberfläche des partikulären Feststoffs auch nur teilweise aus Polymer bestehen.

Der Partikuläre Feststoff ist porös Die Porendurchmesser des porösen partikulären Feststoffs betragen 10 - 3.000 Nanometer.

Weitere mögliche Eigenschaften des partikulären Feststoffes, wie z.B. die Art des Polymers, die Art der eingeführten funktionellen Gruppen etc., wurden bereits bei der Beschreibung des erfindungsgemäßen Verfahrens aufgeführt.

Die Erfindung betrifft insbesondere einen partikulären Feststoff mit den zuvor genannten Eigenschaften, der durch die in dieser Schrift beschriebenen Verfahren erhältlich ist.

Schließlich betrifft die vorliegende Erfindung auch die Verwendung der zuvor beschriebenen partikulären Feststoffe als chromatographisches TrennmateriaL Besonders geeignet als chromatographisches Trennmaterial sind partikuläre Feststoffe, an deren Oberfläche kovalent gebundene funktionelle Gruppen erzeugt sind, insbesondere funktionalisierte Polymerpulver.

Ein mögliches Anwendungsgebiet für die erfindungsgemäß hergestellten /funktionalisierten Pulver ist der Einsatz als Trennmaterial für chromatographische Prozesse sowohl im analytischen Bereich als auch bei der Prozesschromatographie. Wesentliche Voraussetzung ist, dass die funktionellen Gruppen chemisch fest an die Polymerkette gebunden sind und somit nicht durch Waschprozesse aus dem Pulvermaterial herausgelöst oder abgewaschen werden können. Diese Anforderung wird durch die vorliegende Erfindung erfüllt.

Spezielle Beispiele für ein Trennmaterial gemäß der vorliegenden Erfindung sind: carboxyl-, amino- oder carboxyl-amino-funktionalisierte Trägerpolymere (z.B. auf Basis von vernetzten Polystyrol, Polypropylen, Polyethylen usw.).

Als besonders vorteilhafte funktionelle Gruppen an dem Trennmaterial haben sich erwiesen: Carboxyl-, Amino-, Hydroxy- und Carbonyl-Gruppen.

Als weitere vorteilhafte funktionelle Gruppen haben sich Fluoratome erwiesen. In diesem Zusammenhang ist die Erfindung insbesondere auf die Verwendung der partikulären Feststoffe als chromatographisches Trennmaterial gerichtet, die durch die in dieser Schrift zuvor beschriebene heterogene Gasphasenfluorierung erhältlich sind.

Die in der Beschreibung genannten Vorteile von Merkmalen und von Kombinationen mehrerer Merkmale sind lediglich beispielhaft und können alternativ oder kumulativ zur Wirkung kommen. Weitere Merkmale sind den Zeichnungen zu entnehmen.

Nachfolgend wird die Erfindung anhand von Beispielen und Zeichnungen näher erläutert, wobei diese Beispiele in keiner Weise als Beschränkung der allgemeinen Idee der Erfindung auszulegen sind, wie sie in der Beschreibung und den Ansprüchen dargelegt ist. Die Beispiele und Zeichnungen dienen lediglich zur Veranschaulichungszwecken und sollen die Erfindung nicht auf die konkret angegebenen Merkmalskombinationen einschränken.

Beschreibung der Figuren

Es zeigen

FIG. 1     die schematische Darstellung einer Flammspritzvorrichtung im Querschnitt.

FIG. 2     einen Vergleich der IR-Spektren von carboxylierten PE-Pulver und PE-Ausgangsmaterial. Die Carboxylierung wurde in einer Vorrichtung gemäß Fig. 1 durchgeführt.

FIG. 3     den Aufbau eines Plasmareaktors.

FIG. 4     einen Vergleich der IR-Spektren von carboxylierten PE-Pulver nach einer Waschprozedur und PE-AusgangsmateriaL Die Carboxylierung wurde in einem Plasmareaktor gemäß Fig. 3 durchgeführt.

FIG. 5   einen Vergleich der IR-Spektren von fluorierten PE-Pulver und PE-Ausgangsmaterial. Die Fluorierung wurde in einem Gasphasenreaktor durchgeführt.

Beispiele

Beispiel 1 - Oberflächenmodifizierung von PE-Pulver durch Einführung von Carboxylgruppen (COOH) in einer Flammspritzvorrichtung

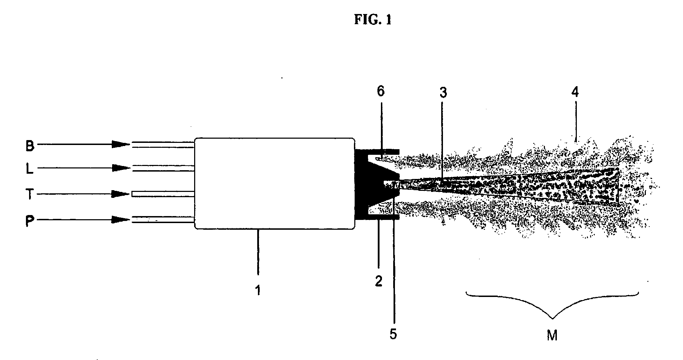

Eingesetzt wurde eine Flammspritzvorrichtung wie in Fig. 1 im Querschnitt dargestellt. In den Brennerkopf **1** werden Brenngas **B**, Luft oder Sauerstoff **L**, ein Trägergas **T** und ein partikulärer Feststoff **P** eingeführt. Ein Gemisch aus Trägergas **T** und **P** verlässt den Brennerkopf **1** durch eine zentrale Düsenöffnung **5** in der Brennerdüse **2** und bildet nach Austritt die Trägergas-Pulver Zone **3**. Ein entzündetes Gemisch aus Brenngas **B** und Sauerstoff oder Luft **L** bildet eine Verbrennungsflamme **4**, die aus einer ringförmigen Düsenöffnung **6** austritt, welche die zentrale Düsenöffnung **5** umgibt. Die chemische Modifizierung findet im Modifizierungsbereich **M** des Pulvers statt.

In dieser Vorrichtung wurde eine Carboxylierung einer Polyethylenoberfläche mit folgenden Substanzen und Versuchsparametern durchgeführt:

| Parameter | Stellbereich |
|---|---|
| Trägergas für Pulver **T** | Luft |
| Brenngas-Gemisch **L/B** | Sauerstoff/ Acetylen |
| Partikulärer Feststoff **P** | Polymerpulver Polyethylen, Purell 1840H (Fa. BASF) |
| Pulverpartikelgröße | Siebfraktion <100 $\mu$m |
| Druck Verbrennungsgas | 0,01 - 10 bar |
| Druck Trägergas | 0,01 -10 bar |

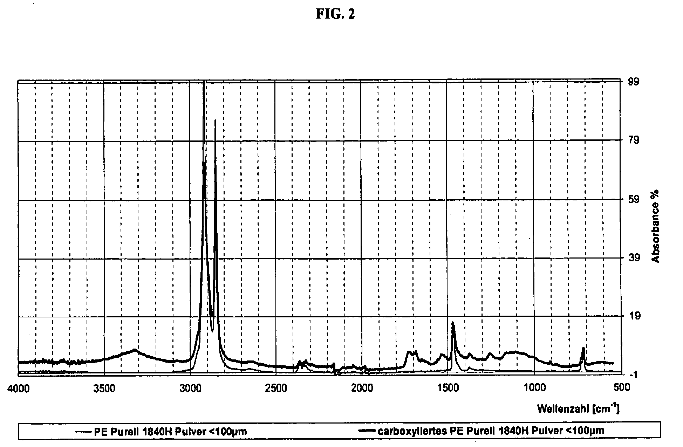

Das Pulvermaterial wurde mittels Wasserbad zurückgewonnen. In der Figur 2 ist die Carboxylierung der Oberfläche des Polyethylens (PE) im Vergleich zum Ausgangsmaterial mittels IR-Spektroskopie nachgewiesen.

Beispiel 2 Oberflächenmodifizierung von PE-Pulver durch Einführung von Carboxylgruppen (COOH) im Plasmareaktor

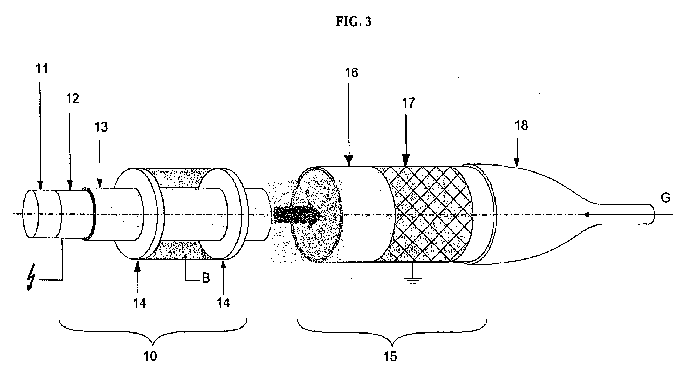

Eingesetzt wurde der in Fig. 3 dargestellte Plasmareaktor. Der Plasmareaktor besitzt eine innere Elektrode **10**. Die innere Elektrode besteht aus einem zylindrischen Keramikstab **11**, auf dem eine ebenfalls zylindrische Aluminiumelektrode **12** aufgebracht ist. Auf der Aluminiumelektrode befindet sich eine innere Barriere 13, beispielsweise aus einer dielektrischen Substanz. Die innere Elektrode wird in Richtung des fett gezeichneten Pfeils in die äußere Elektrode **15** eingeschoben und mit Zentrierstücken **14** in der äußeren Elektrode zentriert. Die äußere Elektrode besteht aus einer äußeren Barriere **16**, beispielsweise aus einer dielektrischen Substanz, einer auf der Barriere aufgebrachten zylindrischen Kupfergeflechtelektrode **17** und einem Gaszuführungsteil **18**. Durch das Gaszuführungsteil wird das Gas **G** in die Reaktionszone (oder Behandlungszone) **B** eingeleitet. Der partikuläre Feststoff (nicht gezeigt) wird in der Reaktionszone vorgelegt.

In dem beschriebenen Plasmareaktor wurde eine Carboxylierung einer Polyethylenoberfläche mit folgenden Substanzen und Versuchsparametern durchgeführt:

| Parameter | PE mit COOH-Oberfläche |
|---|---|
| Prozesszeit | 80 min |
| Reaktorspannung | 6,6 kV |
| Reaktorstrom | 185 mA |
| Elektrodengeometrie | zylinderförmig |
| Entladung | gepulst |
| Gasstrom | 201/h |
| Gasart | Sauerstoff |

(fortgesetzt)

| Parameter | PE mit COOH-Oberfläche |
|---|---|
| Polymermaterial | Polyethylen (mittlerer-Ø 250μm) |

Mittels chemischer Nachweisreaktionen, IR-Spektroskopie und XPS-Analyse konnte eindeutig die Modifizierung der Oberfläche mit Carboxylgruppen auch nach dem Waschprozess und bei Langzeitstabilitätsuntersuchungen nachgewiesen werden. Der Waschprozess erfolgte mit Toluol, Aceton und Wasser und wurde dreimal hintereinander durchgeführt. Nach jedem Waschprozess wurde das Pulvermaterial vollständig getrocknet.

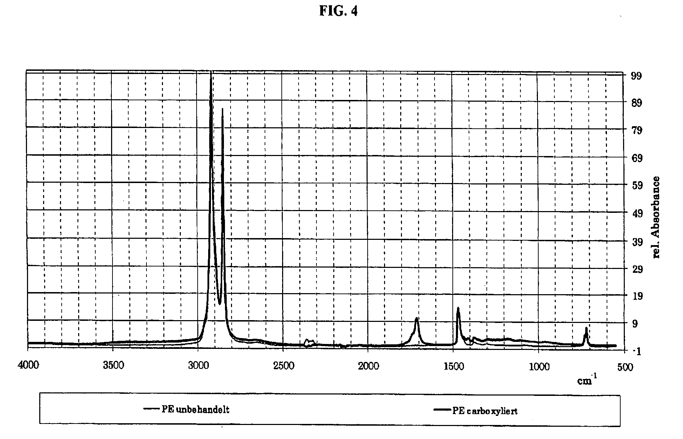

In Fig. 4 ist das IR-Spektrum des dauerhaft funktionalisierten PE-Pulvers dargestellt. Im Vergleich zu dem unbehandelten PE-Pulver weist die carboxylierte PE-Oberfläche ein anderes chromatographisches Verhalten bei der Trennung von Testfarbstoffgemischen auf

Beispiel 3 - Oberflächenmodifizierung von PE-Pulver durch Einführung von Fluor in einer heterogenen Gasphasenreaktion (nicht gemäß der Erfindung)

Durch Gasphasenfluorierung wurde Polyethylen (mittlerer Partikeldurchmesser 250 μm) in einer Standardapparatur fluoriert. Die Charakterisierung der Oberflächenfunktionalisierung erfolgte mit IR-Spektroskopie und XPS-Analyse.

Für die Auswertung der XPS-Detailspektren wurden als Referenzverbindungen Polyvinylfluorid (PVF), Polyvinylidenfluorid (PVdF), Polytetrafluorethylen (PTFE) herangezogen (G. Beamson, D. Briggs, "High Resolution XPS of Organic Polymers", John Wiley & Sons Ltd 1992).

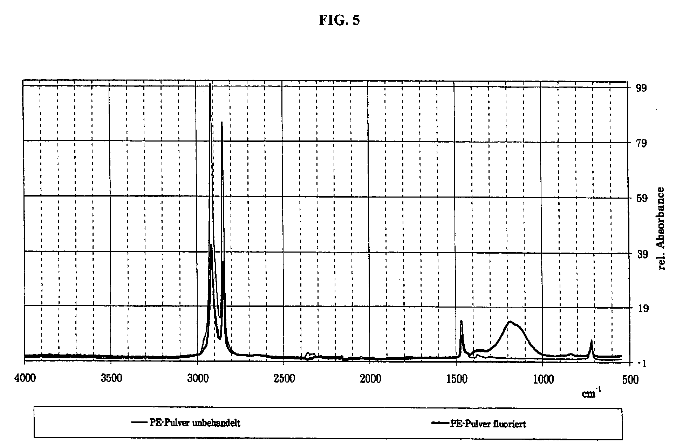

Die Veränderung des IR-Spektrums (Fig. 5) gegenüber dem nicht modifizierten Ausgangsmaterial ist im Bereich zwischen 1300 - 1000 cm$^{-1}$ erkennbar. In diesem Wellenzahlbereich liegen die IR-Absorptionsbanden für C-F, C-$F_2$ und C-$F_3$.

Oberflächenzusammensetzung aus XPS-Übersichtspektren [Atom-%]

| Probe | C1s | | O1s | | F1s | |
|---|---|---|---|---|---|---|
| | % | SD | % | SD | % | SD |
| PE-Pulver fluoriert | 46 | 0.2 | 2 | 0.1 | 52 | 0.2 |
| SD = standard deviation / Standardabweichung | | | | | | |

Analyse der chemischen Zustände aus Detailspektren; Oberflächenzusammensetzung [Atom-%], Bindungsenergie [eV]

| Probe | C 1s | | | | | | | | | | O 1s | | F 1s | |
|---|---|---|---|---|---|---|---|---|---|---|---|---|---|---|
| | CH2-CH2 | | CH2-CF/CF2 | | CHF | | CF2 | | CF3 | | | | | |
| | % | eV | % | eV | % | eV | % | eV | % | eV | % | eV | % | eV |
| PE fluoriert | 1 | 285.0 | 4 | 287.0 | 13 | 289.2 | 18 | 291.5 | 8 | 293.5 | 2 | 535.2 | 54 | 689.4 |

**Patentansprüche**

1. Verfahren zur chemischen Modifizierung einer polymeren Oberfläche eines partikulären Feststoffs, bei dem ein partikulärer Feststoff mit einer polymeren Oberfläche bei Atmosphärendruck mit einem reaktiven Gas in Kontakt gebracht wird und kovalente chemische Bindungen an der polymeren Oberfläche erzeugt werden,
**dadurch gekennzeichnet, dass**
die chemische Modifizierung in einer thermischen Spritzvorrichtung oder in der Reaktionszone eines Plasmareaktors durchgeführt wird.

2. Verfahren nach Anspruch 1, bei dem funktionelle Gruppen erzeugt werden, die kovalent an die polymere Oberfläche gebunden sind.

3. Verfahren nach Anspruch 1 oder 2, wobei in der thermischen Spritzvorrichtung einem Reaktionsgemisch aus reaktivem Gas (T) und partikulärem Feststoff (P) Energie aus einer Verbrennungsflamme (4), Plasmaflamme, einem Lichtbogen oder einem Laser zugeführt wird, eine chemische Modifizierung an der polymeren Oberfläche des partikulären Feststoffs erzeugt wird, und anschließend der partikuläre Feststoff abgekühlt und in partikulärer Form zurückgewonnen wird.

4. Verfahren nach Anspruch 3, bei dem der partikuläre Feststoff abgekühlt wird, indem er in ein Kühlmedium geleitet wird.

5. Verfahren nach Anspruch 1 oder 2, bei dem die chemische Modifizierung in einem Plasmareaktor in einem elektrischen Wechselfeld durchgeführt wird, wobei der partikuläre Feststoff in die Reaktionszone eines Plasmareaktors eingeführt wird,
ein reaktives Gas zugeführt wird, und
auf der polymeren Oberfläche des partikulären Feststoffs durch Vorgabe des Reaktorstroms und der Reaktorspannung sowie durch Anlegen einer kontinuierlichen oder gepulsten Entladung die Temperatur gesteuert wird, so dass die polymere Oberfläche durch Reaktion mit dem reaktiven Gas chemisch modifiziert wird.

6. Verfahren nach einem der Ansprüche 1-5, wobei die polymere Oberfläche aus einem vernetzten oder unvernetzten Polyolefin, Styrolpolymer, Polymer auf Basis von Divinylbenzol oder Vinylpolymer besteht, das reaktive Gas Sauerstoff enthält und die chemische Modifizierung die Einführung von Carboxyl-, Hydroxyl-, Carbonyl oder Nitrogruppen an der polymeren Oberfläche ist.

7. Verfahren nach Anspruch 6 mit Bezug auf Anspruch 5, bei dem die Reaktorspannung auf einen effektiven Wert von 0,1 bis 10 $kV_{eff}$ und der Reaktorstrom auf einen effektiven Wert von 1 - 2000 $mA_{eff}$ eingestellt wird und eine gepulste Entladung mit einem Tastverhältnis von 0,1% bis 10% angelegt wird.

8. Partikulärer Feststoff, erhältlich durch ein Verfahren nach einem der Ansprüche 1-7, mit einer Partikelgröße von 3 - 1000 Mikrometer und einer Oberfläche aus einem Polymer, wobei die Oberfläche durch Erzeugung kovalent an die polymere Oberfläche gebundener funktioneller Gruppen chemisch modifiziert ist und wobei die Partikel des partikulären Feststoffs porös sind und Porendurchmesser von 10 - 3.000 Nanometer aufweisen.

9. Partikulärer Feststoff nach Anspruch 8, wobei die Oberfläche aus einem vernetzten oder unvernetzten Polyolefin, Styrolpolymer, Polymer auf Basis von Divinylbenzol oder Vinylpolymer besteht, und die Oberfläche mit Carboxyl-, Hydroxyl-, Carbonyl oder Nitrogruppen chemisch modifiziert ist.

10. Partikulärer Feststoff nach Anspruch 8, wobei die funktionelle Gruppe ausgewählt ist aus einer Alkyl-, Alkenyl-, Alkinylgruppe oder einer Gruppe, die mindestens eines der Elemente Phosphor, Bor, Silizium, Aluminium und/oder Titan enthält.

11. Partikulärer Feststoff nach einem der Ansprüche 8- 10, dessen Partikel vollständig aus dem Polymer bestehen.

12. Partikulärer Feststoff nach einem der Ansprüche 8-10, dessen Partikel eine Schale aus dem Polymer aufweisen.

13. Verwendung des partikulären Feststoffs wie in einem der Ansprüche 8-12 beschrieben als chromatographisches Trennmaterial.

14. Verwendung einer thermischen Spritzvorrichtung zur Durchführung eines Verfahrens zur chemischen Modifizierung der polymeren Oberfläche eines partikulären Feststoffs, wie in einem der Ansprüche 1-4 beschrieben.

**Claims**

1. A method for chemically modifying a polymeric surface of a particulate solid, whereby a particulate solid having a polymeric surface is brought in contact with a reactive gas at atmospheric pressure and covalent chemical bonds are produced on the polymeric surface,
**characterized in that**
a chemical modification is carried out in a thermal spraying device or in the reaction zone of a plasma reactor.

**2.** A method according to claim 1, in which functional groups are produced which are bonded covalently to the polymeric surface.

**3.** A method according to claim 1 or 2, whereby in a thermal spraying device a reaction mixture of reactive gas (T) and particulate solid (P) is supplied with energy from a combustion flame (4), plasma flame, an electric arc or a laser, a chemical modification is produced on the polymeric surface of the particulate solid, and subsequently the particulate solid is cooled down and recovered in particulate form.

**4.** A method according to claim 3, in which the particulate solid is cooled down by immersion in a cooling medium.

**5.** A method according to claim 1 or 2, in which the chemical modification is carried out in a plasma reactor in an alternating electric field, wherein the particulate solid is introduced in the reaction zone of a plasma reactor, a reactive gas is supplied, and on the polymeric surface of the particulate solid by setting the reactor current and the reactor voltage and by application of a continuous or pulsed discharge the temperature is controlled such that the polymeric surface is modified chemically by reaction with the reactive gas.

**6.** A method according to one of the claims 1 to 5, wherein the polymeric surface consists of a cross-linked or non-cross-linked polyolefin, styrene polymer, divinylbenzene-based polymer or vinyl polymer, the reactive gas contains oxygen and the chemical modification is the introduction of carboxyl, hydroxyl, carbonyl or nitro groups on the polymeric surface.

**7.** A method according to claim 6 with regard to claim 5, wherein the reactor voltage is set to an effective value of 0.1 to 10 $kV_{eff}$ and the reactor current to an effective value of 1 to 2000 $mA_{eff}$ and a pulsed discharge with a duty factor of 0.1% to 10% is applied.

**8.** A particulate solid, attainable by a process based on one of the claims 1 to 7, with a particle size of 3 to 1000 micrometers and a surface consisting of a polymer, wherein the surface is modified chemically by generation of functional groups covalently bonded to the polymeric surface and wherein the particles of the particulate solid are porous and have a pore diameter from 10 to 3,000 nanometers.

**9.** The particulate solid according to claim 8, wherein the surface consists of a cross-linked or non-cross-linked polyolefin, styrene polymer, divinylbenzene-based polymer or vinyl polymer and the surface is chemically modified with carboxyl, hydroxyl, carbonyl or nitro groups.

**10.** The particulate solid according to claim 8, wherein the functional group is selected from an alkyl, alkenyl, alkynyl group or a group that contains at least one of the elements phosphorus, boron, silicon, aluminum and/or titanium.

**11.** The particulate solid according to one of the claims 8-10, the particles of which consist completely of the polymer.

**12.** The particulate solid according to one of the claims 8-10, the particles of which have a shell consisting of the polymer.

**13.** Use of the particulate solid, as described in one of the claims 8 to 12, as a chromatographic separation material.

**14.** Use of a thermal spraying device for the implementation of a method for chemically modifying the polymeric surface of a particulate solid, as described in one of the claims 1 to 4.

**Revendications**

**1.** Procédé servant à modifier de manière chimique une surface polymère d'une matière solide particulaire, dans le cadre duquel une matière solide particulaire comprenant une surface polymère est amenée en contact, à une pression atmosphérique, avec un gaz réactif et où des liaisons chimiques covalentes sont générées au niveau de la surface polymère,
**caractérisé en ce**
**que** la modification chimique est effectuée dans un dispositif d'injection thermique ou dans la zone de réaction d'un réacteur à plasma.

**2.** Procédé selon la revendication 1, dans le cadre duquel des groupes fonctionnels sont générés, qui sont liés de manière covalente à la surface polymère.

**3.** Procédé selon la revendication 1 ou 2, sachant que de l'énergie constituée d'une flamme de combustion (4), d'une flamme de plasma, d'un arc électrique ou d'un laser est amenée dans le dispositif d'injection thermique à un mélange de réaction composé d'un gaz de réaction (T) et d'une matière solide particulaire (P), en ce qu'une modification chimique est générée au niveau de la surface polymère de la matière solide particulaire, et en ce qu'immédiatement après la matière solide particulaire est refroidie et est récupérée sous une forme particulaire.

**4.** Procédé selon la revendication 3, dans le cadre duquel la matière solide particulaire est refroidie en ce qu'elle est acheminée dans un milieu de refroidissement.

**5.** Procédé selon la revendication 1 ou 2, dans le cadre duquel la modification chimique est effectuée dans un réacteur à plasma dans un champ alternatif électrique, sachant que la matière solide particulaire est introduite dans la zone de réaction d'un réacteur à plasma, en ce qu'un gaz réactif est amené et,
en ce que la température est commandée sur la surface polymère de la matière solide particulaire en spécifiant le courant de réacteur et la tension de réacteur ainsi qu'en appliquant une décharge continue ou par impulsions de sorte que la surface polymère est modifiée de manière chimique par réaction avec le gaz réactif.

**6.** Procédé selon l'une quelconque des revendications 1 à 5, sachant que la surface polymère est constituée d'une polyoléfine réticulée ou non réticulée, d'un polymère styrénique, d'un polymère à base de divinylbenzène ou d'un polymère vinylique, en ce que le gaz réactif contient de l'oxygène, et en ce que la modification chimique est l'introduction de groupes carboxyl, hydroxyl, carbonyl ou nitro au niveau de la surface polymère.

**7.** Procédé selon la revendication 6 en référence à la revendication 5, dans le cadre duquel la tension de réacteur est réglée sur une valeur effective allant de 0, 1 à 10 $kV_{eff}$, et en ce que le courant de réacteur est réglé à une valeur allant de 1 à 2 000 $mA_{eff}$, et en ce qu'une décharge par impulsions est appliquée selon un rapport cyclique allant de 0,1 % à 10 %.

**8.** Matière solide particulaire, susceptible d'être obtenue par un procédé selon l'une quelconque des revendications 1 à 7, présentant une granulométrie allant de 3 à 1 000 micromètres et une surface composée d'un polymère, sachant que la surface est modifiée de manière chimique par génération de groupes fonctionnels liés de manière covalente à la surface polymère et sachant que les particules de la matière solide particulaire sont poreuses et présentent un diamètre de pores de 10 - 3 000 nanomètres.

**9.** Matière solide particulaire selon la revendication 8, sachant que la surface est constituée d'une polyoléfine réticulée ou non réticulée, d'un polymère styrénique, d'un polymère à base de divinylbenzène ou d'un polymère vinylique, et en ce que la surface comprenant des groupes carboxyl, hydroxyl, carbonyl ou nitro est modifiée de manière chimique.

**10.** Matière solide particulaire selon la revendication 8, sachant que le groupe fonctionnel est choisi parmi un groupe alkyle, alcényle, alcynyle ou parmi un groupe qui contient au moins un des éléments parmi le phosphore, le bore, le silicium, l'aluminium et/ou le titane.

**11.** Matière solide particulaire selon l'une quelconque des revendications 8 à 10, dont les particules sont constituées en totalité du polymère.

**12.** Matière solide particulaire selon l'une quelconque des revendications 8 à 10, dont les particules présentent une enveloppe composée du polymère.

**13.** Utilisation de la matière solide particulaire telle que décrite dans l'une quelconque des revendications 8 à 12 en tant que matériau de séparation chromatographique.

**14.** Utilisation d'un dispositif d'injection thermique servant à mettre en oeuvre un procédé servant à modifier de manière chimique la surface polymère d'une matière solide particulaire telle que décrite dans l'une quelconque des revendications 1 à 4.

FIG. 1

FIG. 2

FIG. 3

FIG. 4

**FIG. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4227631 A1
- WO 2007124921 A
- DE 10159940
- DE 3511743
- EP 0566883 A
- EP 0738751 A
- DE 102006013681
- DE 10159939
- DE 69110541 T2
- EP 2145974 A1
- EP 2128300 A1
- AT 194605
- CH 325202

**In der Beschreibung aufgeführte Nicht-Patentliteratur**

- **H.-J. TILLER ; TH. RICHTER.** *Vakuum in Forschung und Praxis,* 2004, vol. 16 (2), 85-87
- **H.-J. TILLER ; B. MAGNUS ; R. GÖBEL ; R. MUSIL ; H. WINKELMANN ; A. GARSCHKE.** *Materialien und Werkstoffe,* 1986, vol. 12, 1311-1320
- **J. FRIEDRICH.** Funktionalisierung von Polymeroberflächen mit anschließender Pfropfung und Derivatisierung. *Vortrag,* 04. November 2009, http://www.unileipzig.de/~iom/muehlleithen/2007/friedrich.pdf
- **CHI-SAN WU.** Column Handbook for Size Exclusions Chromatography. Academic Press, 1999
- **JOACHIM ULBRICHT.** Grundlagen der Synthese von Polymer. Hüthig Wepf Verlag, 1992
- **H. DROST.** Plasmachemie. Akademie Verlag, 1978, 20, , 21
- **H. RUTSCHER.** Plasmatechnik. Hanser Verlag, 1984, 13, , 14
- **G. FRANZ.** Oberflächentechnik mit Niederdruckplasmen. Springer Verlag, 1994
- **MICHAEL A. LIEBERMAN ; ALLAN J. LICHTENBERG.** Principles of Plasma Discharges and Materials Processing. Wiley, 2005
- Plasmaphysik. **R. J. GOLDSTON ; P. H. RUTHERFORD.** Eine Einführung. Vieweg, 1998
- Theoretische Plasmaphysik. **K.-H. SPATSCHEK.** Eine Einführung. Teubner, 1990
- **F. F. CHEN.** Introduction to Plasma Physics and Controlled Fusion. Plenum Press, 1983
- **G. BEAMSON ; D. BRIGGS.** High Resolution XPS of Organic Polymers. John Wiley & Sons Ltd, 1992